# EUROPÄISCHE PATENTSCHRIFT

(11) **EP 3 428 889 B1**
(45) Veröffentlichungstag und Bekanntmachung des Hinweises auf die Patenterteilung: **14.05.2025**
(21) Anmeldenummer: 18179207.8
(22) Anmeldetag: 22.06.2018
(51) Int. Cl.: G07C 9/00, E05B 81/78, E05B 81/88, B60R 25/24, B60R 25/40

(54) **TÜRGRIFFANORDNUNG FÜR EIN KRAFTFAHRZEUG MIT EINER STROMÜBERTRAGUNGSEINRICHTUNG**
DOOR HANDLE ASSEMBLY FOR A MOTOR VEHICLE WITH A POWER TRANSFER DEVICE
DISPOSITIF FORMANT POIGNÉE DE PORTE POUR UN VÉHICULE AUTOMOBILE POURVU D'UN DISPOSITIF DE TRANSFERT DU COURANT

(30) Priorität: 11.07.2017 DE 102017115455
(43) Veröffentlichungstag der Anmeldung: 16.01.2019
(73) Patentinhaber: Huf Hülsbeck & Fürst GmbH & Co. KG, 42551 Velbert (DE)
(72) Erfinder: Wittwer, Dirk, 42579 Heiligenhaus (DE); Mönig, Stefan, 58332 Schwelm (DE)

(56) Entgegenhaltungen:
- EP-A2- 1 460 204
- EP-A2- 3 144 904
- DE-A1- 102005 031 186
- DE-T2- 60 020 296
- FR-A1- 3 013 069

## Beschreibung

Die Erfindung betrifft einen Türgriffanordnung für ein Kraftfahrzeug gemäß dem Oberbegriff des Patentanspruchs 1.

Aus dem Stand der Technik sind Schließvorrichtungen bekannt, welche einen elektronischen Kraftfahrzeugschlüssel zur drahtlosen Kommunikation mit einer fahrzeugseitigen Steuereinrichtung aufweisen, um das Schloss des Kraftfahrzeuges zu entriegeln und/oder verriegeln. Durch eine Betätigung eines an einer Tür angeordneten Türgriffs kann die Tür geöffnet werden. Nachteilig bei solchen Schließvorrichtungen ist, dass bei einer entladenen oder nicht funktionsfähigen Batterie des Kraftfahrzeugschlüssels, das Schloss nicht mehr entriegelt bzw. verriegelt werden kann. Für den Fall ist ein Schließzylinder dem Schloss zugeordnet, welcher mit einem mechanischen Notschlüssel betätigt werden kann, um die Tür durch ein Betätigen des Türgriffs zu öffnen. Dies führt zu erhöhten Kosten des Kraftfahrzeugs durch die zusätzlichen Bauteile wie der Schließzylinder und die Anbindung des Schließzylinders zum Schloss sowie den mechanischen Schlüssel. Eine andere Möglichkeit der Notöffnung des Kraftfahrzeugs ist die Energie zum Entriegeln und/oder Verriegeln des Kraftfahrzeugs durch eine externe Vorrichtung von außen bereitzustellen.

Die Veröffentlichungen EP3144904A2 und FR3013069A1 repräsentieren relevanten Stand der Technik.

Der vorliegenden Erfindung liegt die Aufgabe zugrunde, den Energieverbrauch der Türgriffanordnung zu minimieren.

Die erfindungsgemäße Aufgabe wird durch den kennzeichnenden Teil des Patentanspruchs 1 gelöst. In den abhängigen Ansprüchen sind vorteilhafte und besonders zweckmäßige Ausgestaltungen der Erfindung angegeben.

Durch die Erfindung wird eine Türgriffanordnung für ein Kraftfahrzeug zur Verfügung gestellt, welche eine kontaktlose Stromübertragungseinrichtung mit sehr geringen Energieverbrauch aufweist. Dies wird dadurch erreicht, dass die Aktivierung der Stromübertragungseinrichtung nur dann erfolgt, wenn ein Benutzer die Stromübertragung durch ein Schaltmittel betätigt, sodass die Energie des Kraftfahrzeugs eingespart werden kann. Auf diese Weise kann ein ständiges Pollen der NFC-Sendeeinrichtung auf der Suche nach einer passenden externen Vorrichtung verzichtet werden. Ferner kann auf den Schließzylinder und die Schließzylinderanbindungen zum Schloss sowie den Notschlüssel verzichtet werden. Des Weiteren kann durch die kontaktlose Energieübertragung der Komfort der Notentriegelung gesteigert werden.

Nach einer weiteren vorteilhaften Ausführungsform der Erfindung kann vorgesehen sein, dass die Stromübertragungseinrichtung nach wenigstens einem NFC-Standard arbeitende NFC-Sendeeinheit, insbesondere eine NFC-Ladespule, umfasst. Durch ein Einbringen und Halten der externen Vorrichtung in ein elektromagnetisches Feld einer NFC-Sendeeinrichtung unter Nutzung der NFC-Antenne der externen Vorrichtung zur induktiven Kopplung. Energie wird dabei induktiv von der NFC-Sendeeinrichtung als magnetisches Wechselfeld übertragen, wobei in der als Spule beziehungsweise nach Art einer Spule ausgebildeten Antenne eine Spannung induziert wird, und somit in der Antenne ein Strom erzeugt wird. In der externen Vorrichtung, insbesondere in einem elektronischen Kraftfahrzeugschlüssel oder Mobiltelefon, eine Elektronikeinheit angeordnet, welche dabei vorteilhafterweise derart ausgebildet ist, dass dieser Strom als bereitgestellte Energie zur kontaktlosen Betätigung der Schließvorrichtung des Kraftfahrzeuges über eine Luftschnittstelle nutzbar ist. Diese Anordnung benötigt einen sehr geringen Bauraum und kann somit in dem Fahrzeugtürgriff angeordnet werden. Durch den verwendeten NFC-Standard können unterschiedliche externe Vorrichtungen geladen werden, welche eine passende Schnittstelle aufweisen, da der NFC-Standard bereits in vielen Geräten, insbesondere Mobiltelefonen bereits vorhanden ist und die NFC-Technologie sich immer mehr in Zukunft durchsetzten wird.

Nach einer weiteren vorteilhaften Ausführungsform der Erfindung kann vorgesehen sein, dass ein erster Code zwischen einer externen Vorrichtung und einer fahrzeugseitigen Steuereinheit zum Entriegeln und/oder Verriegeln des Kraftfahrzeugs austauschbar ist, wobei ein zweiter Code aus der externen Vorrichtung mittels der NFC-Sendeeinheit zum Aktivieren der Stromübertragungseinrichtung im Abstand von weniger als 10 cm mittels der NFC-Sendeeinheit auslesbar ist. Danach wird der zweite Code mit einem in der Steuereinheit vorgespeicherten Code verglichen, um festzustellen, ob der zweite Code mit in der Steuereinheit vorgespeicherten Code übereinstimmt Durch diese Maßnahme gelingt es, dass missbräuchliche Nutzung der Stromübertragungseinrichtung zu verhindern, sodass die Fahrzeugbatterie durch Unbefugte nicht entladen wird, wenn eine nicht passende externe Vorrichtung sich in der Nähe der Stromübertragungseinrichtung befindet.

Sehr kostengünstig und einfach ist die Konstruktion, wenn die externe Vorrichtung ein Mobiltelefon ist.

Sehr kostengünstig und einfach ist die Konstruktion, wenn die externe Vorrichtung ein elektronischer Kraftfahrzeugschlüssel ist.

Nach einer weiteren vorteilhaften Ausführungsform der Erfindung kann vorgesehen sein, dass das Schaltmittel kapazitiv und/oder induktiv und/oder mechanisch und/oder optisch und/oder piezoelektrisch ausgebildet ist. Durch diese Anordnung wird erreicht, dass eine bewusste Betätigung der kontaktlosen Stromübertragung erfolgt. Das kapazitive Schaltmittel hat den Vorteil, dass die aktuellen Schließvorrichtungen bereits einen kapazitiven Sensor aufweisen, sodass das der bereits vorhandene kapazitive Sensor nutzbar ist. Mechanische, optische und piezoelektrische Schaltmitteln haben den Vorteil, dass sie besonders bei ungünstigen Umwelteinflüssen, wie Regenwasser, sicher funktionieren und keine Fehlauslösungen aufweisen. Nach einer weiteren vorteilhaften Ausführungsform der Erfindung kann vorgesehen sein, dass das Schaltmittel durch eine Geste, insbesondere durch eine Handbewegung des Benutzers, aktivierbar ist. Durch diese Anordnung wird erreicht, dass eine bewusste Betätigung der kontaktlosen Stromübertragung erfolgt.

Sehr kostengünstig und einfach ist die Konstruktion, wenn dass die Geste des Benutzers durch eine Bewegung des Fahrzeugtürgriffs, insbesondere ein Drücken oder Ziehen am Fahrzeugtürgriff, erfolgt. Ferner kann der Fahrzeugtürgriff am und/oder im Träger schwenkbar oder ausfahrbar oder feststehend angeordnet sein.

Nach einer weiteren vorteilhaften Ausführungsform der Erfindung kann vorgesehen sein, dass die im Fahrzeugtürgriff angeordnete Steuereinheit eine Leiterplatte aufweist, wobei die NFC-Ladespule auf der Leiterplatte angeordnet ist. Diese Anordnung hat den Vorteil, dass die Stromübertragungseinrichtung als ein Modul ausgebildet ist. Dadurch können die zur Kontaktierung der Ladespule und der Steuereinheit benötigten Kabelverbindungen und Stecker wegfallen.

Nach einer weiteren vorteilhaften Ausführungsform der Erfindung kann vorgesehen sein, dass die

Stromübertragungseinrichtung mittels der Steuereinheit nach einer vorbestimmten Zeit, insbesondere nach 2 min, automatisch deaktivierbar ist. Das hat den Vorteil, dass kein Stromverbrauch entsteht, wenn das Schaltmittel versehentlich nicht abgeschaltet wird.

Nach einer weiteren vorteilhaften Ausführungsform der Erfindung kann vorgesehen sein, dass das Schaltmittel ausschließlich aktivierbar ist, wenn das Kraftfahrzeug verriegelt ist. Auf diese Weise kann ausgeschlossen werden, dass bei einem Keyless Entry-System z. B durch das Ziehen am Fahrzeugtürgriff zur Aktivierung der Stromübertragungseinrichtung die Tür geöffnet wird.

Nach einer weiteren vorteilhaften Ausführungsform der Erfindung kann vorgesehen sein, dass der erste Code unterschiedlich zum zweiten Code ausgebildet ist. Auf diese Weise kann einfach zwischen der Entriegelung und/oder Verriegelung unterschieden werden und somit sind beide Vorgänge getrennt voneinander durchführbar.

Nach einer weiteren vorteilhaften Ausführungsform der Erfindung kann vorgesehen sein, dass die Steuereinheit 6 zur Steuerung der Stromübertragungseinrichtung 4 mit der fahrzeugseitigen Steuereinheit 7 als ein integraler Teil ausgebildet sind. Durch die Zusammenfassung der die Steuereinheit 6 und der fahrzeugseitigen Steuereinheit 7 kann eine Reduzierung der Bauteile erreicht werden.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1: eine Schnittansicht einer ersten Ausführungsform der Türgriffanordnung mit einem mechanischen Schaltmittel.
Figur 2: eine Schnittansicht einer zweiten Ausführungsform der Türgriffanordnung mit einem induktiven Schaltmittel.
Figur 3: eine Schnittansicht einer dritten Ausführungsform der Türgriffanordnung mit einem kapazitiven Schaltmittel.

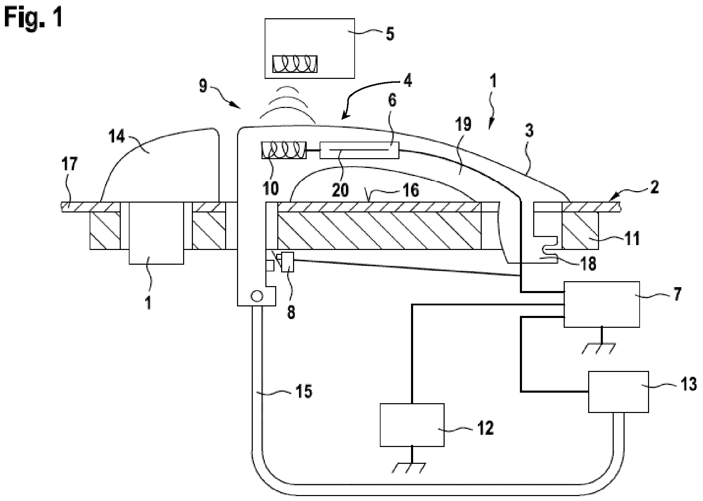

Figur 1 zeigt eine Schnittansicht einer ersten Ausführungsform der erfindungsgemäßen Türgriffanordnung 1 mit einem mechanischen Schaltmittel 8. Die Türgriffanordnung 1 umfasst einen Kraftfahrzeugtürgriff 3, welcher an einer Außenseite 17 einer Tür 17 oder Klappe vorgesehen ist. Der Kraftfahrzeugtürgriff 3 weist mindestens einen Befestigungsabschnitt 18 zur Befestigung an einem Träger 11 auf. Im Hohlraum 19 des Kraftfahrzeugtürgriff 3 ist eine Stromübertragungseinrichtung 4 angeordnet. Die Stromübertragungseinrichtung 4 umfasst eine NFC-Sendeeinheit 9, insbesondere NFC-Ladespule, und eine Steuereinheit 6. Die Steuereinheit 6 weist eine Leiterplatte 20 auf, worauf die NFC-Sendeeinheit 9 angeordnet werden kann. Alternativ kann die NFC-Sendeeinheit 9 mittels einer Kabelverbindung mit der Steuereinheit 6 verbunden werden. Die Steuereinheit 6 wirkt wiederrum mit einem mechanischen Schaltmittel 8 zusammen, welcher eine Aktivierung der NFC-Sendeeinheit 9 mittels der Steuereinheit 6 bewirkt. Das Schaltmittel 8 kann durch ein Betätigen, insbesondere durch ein Ziehen des Kraftfahrzeugtürgriff 3 aktiviert werden. Das Betätigungssignal wird mittels Kabelverbindung zur Steuereinheit 6 übertragen. Zur Minimierung eines Missbrauchs der Stromübertragungsvorrichtung 4 kann ein zweiter Code aus der externen Vorrichtung 5 mittels der NFC-Sendeeinheit 9 zum Aktivieren der Stromübertragungseinrichtung 4 im Abstand von weniger als 10 cm ausgelesen werden. Danach wird der zweite Code mit einem in der Steuereinheit 6 vorgespeicherten Code verglichen, um festzustellen, ob der zweite Code mit dem in der Steuereinheit 6 vorgespeicherten Code übereinstimmt. Ferner weist die Steuereinheit 6 eine Verbindung mit einer fahrzeugseitigen Steuereinheit 7 auf, welche von einer fahrzeugseitigen Batterie 12 mit Energie versorgt wird. Die fahrzeugseitige Steuereinheit 7 steuert ein in der Tür 17 angeordnetes Schloss 13 zur Entriegelung und/oder Verriegelung des Kraftfahrzeugs 2 an. Das Schloss 13 kann einen nicht dargestellten Aktuator aufweisen, welcher den Entriegelungs -bzw. Verriegelungsvorgang durchführt. Das Schloss 13 kann sich in der "verriegelten Position" befinden, in welcher der Fahrzeugtürgriff 3 wirkungslos ist. Dies kann durch eine nicht dargestellte Kupplung erfolgen. Der Fahrzeugtürgriff 3 ist mittels einer mechanischen Schlossanbindung 15 mit dem Schloss 13 verbindbar. Die Verbindung ist entkoppelt, wenn die Kupplung sich in der "verriegelten Position" befindet. Solange die "verriegelten Position" vorliegt, wird eine Betätigung des Kraftfahrzeugtürgriff 3 durch Unbefugte nicht auf das Schloss 13 übertragen. Liegt die "verriegelte Position" vor, so sorgt ein sogenanntes "Keyless Entry System" dafür, dass nur berechtigte Personen Zugang ins Innere des Kraftfahrzeuges 2 erlangen können. Dies geschieht durch einen Authentifizierungsvorgang zwischen dem Kraftfahrzeug 2, insbesondere fahrzeugseitige ECU 7, und einer externen Vorrichtung 5, insbesondere ein ID-Geber oder ein Mobiltelefon, die mit der berechtigten Person getragen wird. Im Normalfall wird unter Nutzung der elektrischen Energie der Batterie 12 ein elektrisches Feld durch die nicht näher gezeigte kapazitive Sensoren um den Kraftfahrzeugtürgriff 3 aufgebaut. Der kapazitive Sensor kann in der Steuereinheit 6 integriert sein. Durch eine an Kraftfahrzeugtürgriff 3 sich nähernde Hand wird die im Kraftfahrzeugtürgriff 3 befindliche Elektronik durch die verändernde Kapazität des elektrischen Felds geweckt und anschließend die Authentifizierungsabfrage ausgelöst. Dabei wird ein erster Code zwischen einer externen Vorrichtung 5 und einer fahrzeugseitigen Steuereinheit 7 zum Entriegeln und/oder Verriegeln des Kraftfahrzeugs 2 verwendet, In einer "entriegelten Position" wird die Verbindung zwischen dem Schloss 13 und dem Fahrzeugtürgriff 3 mittels der Kupplung wieder hergestellt. Durch das Betätigen des Fahrzeugtürgriff 3 kann dann die Tür 17 geöffnet werden.

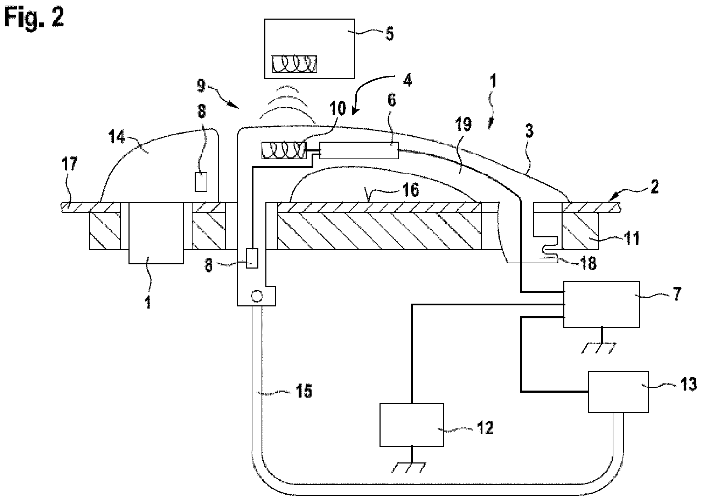

Figur 2 zeigt eine Schnittansicht einer zweiten Ausführungsform der Türgriffanordnung mit einem induktiven Schaltmittel. Die Türgriffanordnung 1 umfasst einen Kraftfahrzeugtürgriff 3, welcher an einer Außenseite 17 einer Tür 17 oder Klappe vorgesehen ist. Der Kraftfahrzeugtürgriff 3 weist mindestens einen Befestigungsabschnitt 18 zur Befestigung an einem Träger 11 auf. Im Hohlraum 19 des Kraftfahrzeugtürgriff 3 ist eine Stromübertragungseinrichtung 4 angeordnet. Die Stromübertragungseinrichtung 4 umfasst eine NFC-Sendeeinheit 9, insbesondere NFC-Ladespule, und eine Steuereinheit 6. Die Steuereinheit 6 weist eine Leiterplatte 20 auf, worauf die NFC-Sendeeinheit 9 angeordnet werden kann. Alternativ kann die NFC-Sendeeinheit 9 mittels einer Kabelverbindung mit der Steuereinheit 6 verbunden werden. Die Steuereinheit 6 wirkt wiederrum mit einem induktiven Schaltmittel 8 zusammen, welcher eine Aktivierung der NFC-Sendeeinheit 9 mittels der Steuereinheit 6 bewirkt. Das Schaltmittel 8 umfasst mindestens einen Magneten 21, welcher auf einem Schließzylinderturm 14 angeordnet sein kann, und zumindest ein im oder am Kraftfahrzeugtürgriff 3 angeordnetes sensitives Element 8, insbesondere ein Reed-Schalter 8 oder ein Hall-Element 8. Das Schaltmittel 8 kann durch ein Betätigen, insbesondere durch ein Ziehen des Kraftfahrzeugtürgriff 3 aktiviert werden. Das Betätigungssignal wird mittels Kabelverbindung zur Steuereinheit 6 übertragen. Zur Minimierung eines Missbrauchs der Stromübertragungsvorrichtung 4 kann ein zweiter Code aus der externen Vorrichtung 5 mittels der NFC-Sendeeinheit 9 zum Aktivieren der Stromübertragungseinrichtung 4 im Abstand von weniger als 10 cm ausgelesen werden. Danach wird der zweite Code mit einem in der Steuereinheit 6 vorgespeicherten Code verglichen, um festzustellen, ob der zweite Code mit dem in der Steuereinheit 6 vorgespeicherten Code übereinstimmt. Ferner weist die Steuereinheit 6 eine Verbindung mit einer fahrzeugseitigen Steuereinheit 7 auf, welche von einer fahrzeugseitigen Batterie 12 mit Energie versorgt wird. Die fahrzeugseitige Steuereinheit 7 steuert ein in der Tür 17 angeordnetes Schloss 13 zur Entriegelung und/oder Verriegelung des Kraftfahrzeugs 2 an. Das Schloss 13 kann einen nicht dargestellten Aktuator aufweisen, welcher den Entriegelungs - bzw. Verriegelungsvorgang durchführt. Das Schloss 13 kann sich in der "verriegelten Position" befinden, in welcher der Fahrzeugtürgriff 3 wirkungslos ist. Dies kann durch eine nicht dargestellte Kupplung erfolgen. Der Fahrzeugtürgriff 3 ist mittels einer mechanischen Schlossanbindung 15 mit dem Schloss 13 verbindbar. Die Verbindung ist entkoppelt, wenn die Kupplung sich in der "verriegelten Position" befindet. Solange die "verriegelten Position" vorliegt, wird eine Betätigung des Kraftfahrzeugtürgriff 3 durch Unbefugte nicht auf das Schloss 13 übertragen. Liegt die "verriegelte Position" vor, so sorgt ein sogenanntes "Keyless Entry System" dafür, dass nur berechtigte Personen Zugang ins Innere des Kraftfahrzeuges 2 erlangen können. Dies geschieht durch einen Authentifizierungsvorgang zwischen dem Kraftfahrzeug 2, insbesondere fahrzeugseitige ECU 7, und einer externen Vorrichtung 5, insbesondere ein ID-Geber oder ein Mobiltelefon, die mit der berechtigten Person getragen wird. Im Normalfall wird unter Nutzung der elektrischen Energie der Batterie 12 ein elektrisches Feld durch die nicht näher gezeigte kapazitive Sensoren um den Kraftfahrzeugtürgriff 3 aufgebaut. Der kapazitive Sensor kann in der Steuereinheit 6 integriert sein. Durch eine an Kraftfahrzeugtürgriff 3 sich nähernde Hand wird die im Kraftfahrzeugtürgriff 3 befindliche Elektronik durch die verändernde Kapazität des elektrischen Felds geweckt und anschließend die Authentifizierungsabfrage ausgelöst. Dabei wird ein erster Code zwischen einer externen Vorrichtung 5 und einer fahrzeugseitigen Steuereinheit 7 zum Entriegeln und/oder Verriegeln des Kraftfahrzeugs 2 verwendet, In einer "entriegelten Position" wird die Verbindung zwischen dem Schloss 13 und dem Fahrzeugtürgriff 3 mittels der Kupplung wieder hergestellt. Durch das Betätigen des Fahrzeugtürgriff 3 kann dann die Tür 17 geöffnet werden.

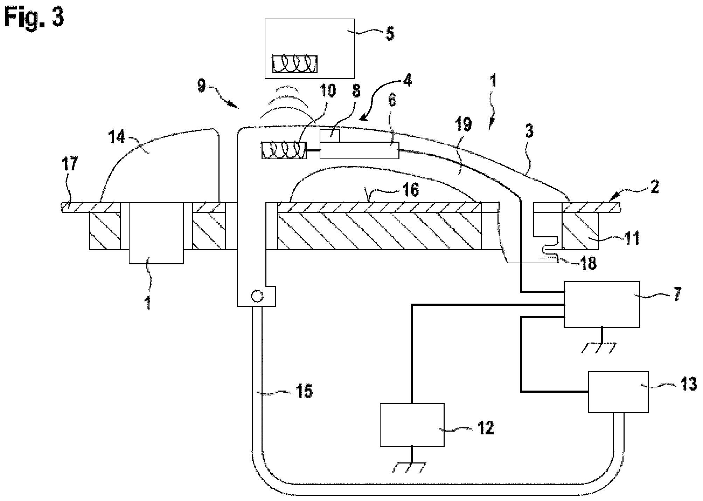

Figur 3 zeigt eine Schnittansicht einer dritten Ausführungsform der Türgriffanordnung mit einem kapazitiven Schaltmittel. Die Türgriffanordnung 1 umfasst einen Kraftfahrzeugtürgriff 3, welcher an einer Außenseite 17 einer Tür 17 oder Klappe vorgesehen ist. Der Kraftfahrzeugtürgriff 3 weist mindestens einen Befestigungsabschnitt 18 zur Befestigung an einem Träger 11 auf. Im Hohlraum 19 des Kraftfahrzeugtürgriff 3 ist eine Stromübertragungseinrichtung 4 angeordnet. Die Stromübertragungseinrichtung 4 umfasst eine NFC-Sendeeinheit 9, insbesondere NFC-Ladespule, und eine Steuereinheit 6. Die Steuereinheit 6 weist eine Leiterplatte 20 auf, worauf die NFC-Sendeeinheit 9 angeordnet werden kann. Alternativ kann die NFC-Sendeeinheit 9 mittels einer Kabelverbindung mit der Steuereinheit 6 verbunden werden. Die Steuereinheit 6 wirkt wiederrum mit mindestens einem kapazitiven Schaltmittel 8 zusammen, welcher eine Aktivierung der NFC-Sendeeinheit 9 mittels der Steuereinheit 6 bewirkt. Das Schaltmittel 8 umfasst mindestens einen kapazitiven Sensor, welcher im oder am Kraftfahrzeugtürgriff 3 angeordnet sein kann. Das Schaltmittel 8 kann durch eine Annäherung und/oder ein Berühren im Bereich des kapazitiven Sensors 8 mit einer Hand. Bei Anordnung von mindestens zwei in Reihe verbundenen kapazitiven Sensoren kann durch eine Geste ein bewusstes Betätigungssignal erzeugt werden. Die Steuereinheit 6 kann die Stromübertragungseinrichtung 4 einschalten, wenn zwei kapazitiven Sensoren entweder gleichzeitig oder nacheinander betätigt werden. Das Betätigungssignal wird mittels Kabelverbindung zur Steuereinheit 6 übertragen. Zur Minimierung eines Missbrauchs der Stromübertragungsvorrichtung 4 kann ein zweiter Code aus der externen Vorrichtung 5 mittels der NFC-Sendeeinheit 9 zum Aktivieren der Stromübertragungseinrichtung 4 im Abstand von weniger als 10 cm ausgelesen werden. Danach wird der zweite Code mit einem in der Steuereinheit 6 vorgespeicherten Code verglichen, um festzustellen, ob der zweite Code mit dem in der Steuereinheit 6 vorgespeicherten Code übereinstimmt. Ferner weist die Steuereinheit 6 eine Verbindung mit einer fahrzeugseitigen Steuereinheit 7 auf, welche von einer fahrzeugseitigen Batterie 12 mit Energie versorgt wird. Die fahrzeugseitige Steuereinheit 7 steuert ein in der Tür 17 angeordnetes Schloss 13 zur Entriegelung und/oder Verriegelung des Kraftfahrzeugs 2 an. Das Schloss 13 kann einen nicht dargestellten Aktuator aufweisen, welcher den Entriegelungs - bzw. Verriegelungsvorgang durchführt. Das Schloss 13 kann sich in der "verriegelten Position" befinden, in welcher der Fahrzeugtürgriff 3 wirkungslos ist. Dies kann durch eine nicht dargestellte Kupplung erfolgen. Der Fahrzeugtürgriff 3 ist mittels einer mechanischen Schlossanbindung 15 mit dem Schloss 13 verbindbar. Die Verbindung ist entkoppelt, wenn die Kupplung sich in der "verriegelten Position" befindet. Solange die "verriegelten Position" vorliegt, wird eine Betätigung des Kraftfahrzeugtürgriff 3 durch Unbefugte nicht auf das Schloss übertragen. Liegt die "verriegelte Position" vor, so sorgt ein sogenanntes "Keyless Entry System" dafür, dass nur berechtigte Personen Zugang ins Innere des Kraftfahrzeuges 2 erlangen können. Dies geschieht durch einen Authentifizierungsvorgang zwischen dem Kraftfahrzeug 2, insbesondere fahrzeugseitige ECU 7, und einer externen Vorrichtung 5, insbesondere ein ID-Geber oder ein Mobiltelefon, die mit der berechtigten Person getragen wird. Im Normalfall wird unter Nutzung der elektrischen Energie der Batterie 12 ein elektrisches Feld durch die nicht näher gezeigte kapazitive Sensoren um den Kraftfahrzeugtürgriff 3 aufgebaut. Der kapazitive Sensor kann in der Steuereinheit 6 integriert sein. Durch eine an Kraftfahrzeugtürgriff 3 sich nähernde Hand wird die im Kraftfahrzeugtürgriff 3 befindliche Elektronik durch die verändernde Kapazität des elektrischen Felds geweckt und anschließend die Authentifizierungsabfrage ausgelöst. Dabei wird ein erster Code zwischen einer externen Vorrichtung 5 und einer fahrzeugseitigen Steuereinheit 7 zum Entriegeln und/oder Verriegeln des Kraftfahrzeugs 2 verwendet, In einer "entriegelten Position" wird die Verbindung zwischen dem Schloss 13 und dem Fahrzeugtürgriff 3 mittels der Kupplung wieder hergestellt. Durch das Betätigen des Fahrzeugtürgriff 3 kann dann die Tür 17 geöffnet werden.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

### Bezugszeichenliste

- 1: Türgriffanordnung
- 2: Kraftfahrzeug
- 3: Fahrzeugtürgriff
- 4: Stromübertragungseinrichtung
- 5: externe Vorrichtung
- 6: Steuereinheit
- 7: fahrzeugseitige Steuereinheit
- 8: Schaltmittel
- 9: NFC-Sendeeinheit
- 10: NFC-Ladespule
- 11: Träger
- 12: Batterie
- 13: Schloss
- 14: Schließzylinderturm
- 15: Schlossanbindung
- 16: Aussenseite
- 17: Tür
- 18: Befestigungsabschnitt
- 19: Hohlraum
- 20: Leiterplatte
- 21: Magnet

## Patentansprüche

1. Türgriffanordnung (1) für ein Kraftfahrzeug (2) mit einem Fahrzeugtürgriff (3) und vorzugsweise einen Träger (11) zur Befestigung des Fahrzeugtürgriff (3), wobei Fahrzeugtürgriff (3) an einer Außenseite (16) einer Tür (17) oder Klappe vorgesehen ist,
wobei innerhalb des Fahrzeugtürgriffs (3) eine Stromübertragungseinrichtung (4) zum kabellosen Übertragen von Strom vom Fahrzeugtürgriff (3) zu einer externen Vorrichtung (5) angeordnet ist,
wobei der Fahrzeugtürgriff (3) ein Schaltmittel (8) aufweist, welches vorzugsweise innerhalb des Fahrzeugtürgriffs (3) und/oder am Träger (11)angeordnet ist, wobei die Stromübertragungseinrichtung (4), insbesondere ausschließlich, durch einen Benutzer aktivierbar ist,
**dadurch gekennzeichnet, dass** die im Hohlraum (19) des Kraftfahrzeugtürgriffs (3) angeordnete Stromübertragungseinrichtung (4) eine NFC-Sendeeinheit (9), insbesondere NFC-Ladespule, und eine Steuereinheit (6) umfasst,
wobei die Steuereinheit (6) mit
einem mechanischen, induktiven oder kapazitiven Schaltmittel (8) zusammenwirkt, welches eine Aktivierung der NFC-Sendeeinheit (9) mittels der Steuereinheit (6) bewirkt.

2. Türgriffanordnung (1) nach Anspruch 1, **dadurch gekennzeichnet, dass** das Schaltmittel (8) kapazitiv und/oder induktiv und/oder mechanisch und/oder optisch und/oder piezoelektrisch ausgebildet ist.

3. Türgriffanordnung (1) nach Anspruch 1 oder 2, **dadurch gekennzeichnet, dass** das Schaltmittel (8) durch eine Geste, insbesondere durch eine Handbewegung des Benutzers, aktivierbar ist.

4. Türgriffanordnung (1) nach Anspruch 3, **dadurch gekennzeichnet, dass** die Geste des Benutzers durch eine Bewegung des Fahrzeugtürgriffs (3), insbesondere ein Drücken oder Ziehen am Fahrzeugtürgriff (3), erfolgt.

5. Türgriffanordnung (1) nach mindestens einem der Ansprüche 1 bis 4, **dadurch gekennzeichnet, dass** die im Fahrzeugtürgriff (3) angeordnete Steuereinheit (6) eine Leiterplatte (20) aufweist, wobei die NFC-Ladespule (10) auf der Leiterplatte (20) angeordnet ist.

6. Türgriffanordnung (1) nach mindestens einem der Ansprüche 1 bis 5, **dadurch gekennzeichnet, dass** die Stromübertragungseinrichtung (4) mittels der Steuereinheit (6) nach einer vorbestimmten Zeit automatisch deaktivierbar ist.

7. Türgriffanordnung (1) nach mindestens einem der Ansprüche 1 bis 6, **dadurch gekennzeichnet**, das Schaltmittel (8) ausschließlich aktivierbar ist, wenn das Kraftfahrzeug (2) verriegelt ist.

## Claims

1. Door handle assembly (1) for a motor vehicle (2) with a vehicle door handle (3) and preferably a support (11) for securing the vehicle door handle (3), wherein the vehicle door handle (3) is provided on an outer side (16) of a door (17) or flap,
wherein a power transmission device (4) is arranged inside the vehicle door handle (3) for wirelessly transmitting power from the vehicle door handle (3) to an external apparatus (5),
wherein the vehicle door handle (3) has a switching means (8), which is preferably arranged inside the vehicle door handle (3) and/or on the support (11), wherein the power transmission device (4) can be activated by a user, in particular exclusively,
**characterized in that** the power transmission device (4) arranged inside the cavity (19) of the vehicle door handle (3) comprises a NFC transmission unit (9), in particular a NFC charging coil, and a control unit (6), wherein the control unit (6) cooperates with a mechanical, inductive or capacitive switching means (8) that brings about an activation of the NFC transmission unit (9) by means of the control unit (6).

2. Door handle assembly (1) according to Claim 1, **characterized in that** the switching means (8) is designed to operate capacitively and/or inductively and/or mechanically and/or optically and/or piezoelectrically.

3. Door handle assembly (1) according to Claim 1 or 2, **characterized in that** the switching means (8) can be activated by a gesture, in particular by a hand movement of the user.

4. Door handle assembly (1) according to Claim 3, **characterized in that** the gesture by the user is performed by a movement of the vehicle door handle (3), in particular a pressing or pulling on the vehicle door handle (3).

5. Door handle assembly (1) according to at least one of Claims 1 to 4, **characterized in that** the control unit (6) arranged inside the vehicle door handle (3) includes a printed circuit board (20), wherein the NFC charging coil (10) is arranged on the printed circuit board (20).

6. Door handle assembly (1) according to at least one of Claims 1 to 5, **characterized in that** the power transmission device (4) can be deactivated automatically by the control unit (6) after a predetermined time.

7. Door handle assembly (1) according to at least one of Claims 1 to 6, **characterized in that** switching means (8) can only be activated when the motor vehicle (2) is locked.

## Revendications

1. Ensemble poignée de porte (1) d'un véhicule automobile (2) avec une poignée de porte de véhicule (3) et de préférence un support (11) pour fixer la poignée de porte de véhicule (3), sachant qu'une poignée de porte de véhicule (3) est prévue sur un côté extérieur (16) d'une porte (17) ou d'un hayon,
sachant qu'un dispositif de transmission de courant (4) est disposé dans la poignée de porte de véhicule (3) pour la transmission sans fil du courant de la poignée de porte de véhicule (3) à un dispositif externe (5),
sachant que la poignée de porte de véhicule (3) comporte un moyen de connexion (8), lequel est disposé de préférence à l'intérieur de la poignée de porte de véhicule (3) et/ou sur le support (11), sachant que le dispositif de transmission de courant (4) peut être activé, en particulier exclusivement, par un utilisateur
**caractérisé en ce que** le dispositif de transmission de courant (4) disposé dans l'espace creux (19) de la poignée de porte de véhicule (3) comprend une unité émettrice à champ proche (NFC) (9), en particulier une bobine de charge NFC et une unité de commande (6),
sachant que l'unité de commande (6) coopère avec un moyen de connexion (8) mécanique, inductif ou capacitif, lequel produit une activation de l'unité émettrice NFC (9) au moyen de l'unité de commande (6).

2. Ensemble poignée de porte (1) selon la revendication 1, **caractérisé en ce que** le moyen de connexion (8) est constitué de façon capacitive et/ou inductive et/ou mécanique et/ou optique et/ou piézoélectrique.

3. Ensemble poignée de porte (1) selon la revendication 1 ou 2, **caractérisé en ce que** le moyen de connexion (8) peut être activé en particulier par un geste, en particulier par un mouvement de main de l'utilisateur.

4. Ensemble poignée de porte (1) selon la revendication 3, **caractérisé en ce que** le geste de l'utilisateur a lieu par un mouvement de la poignée de porte de véhicule (3), en particulier une pression ou un traction sur la poignée de porte de véhicule (3).

5. Ensemble poignée de porte (1) selon au moins l'une quelconque des revendications 1 à 4, **caractérisé en ce que** l'unité de commande (6) disposée dans la poignée de porte de véhicule (3), comporte une plaquette de circuits imprimés (20), sachant que la bobine de charge à champ proche (NFC) (10) est disposée sur la plaquette de circuits imprimés (20).

6. Ensemble poignée de porte (1) selon au moins l'une quelconque des revendications 1 à 5, **caractérisé en ce que** le dispositif de transmission de courant (4) peut être automatiquement désactivé au bout d'un temps prédéterminé au moyen de l'unité de commande (6).

7. Ensemble poignée de porte (1) selon au moins l'une quelconque des revendications 1 à 6, **caractérisé en ce que** le moyen de connexion (8) ne peut être activé que lorsque le véhicule automobile (2) est verrouillé.
